# EUROPEAN PATENT SPECIFICATION

(11) **EP 4 360 963 B1**
(45) Date of publication and mention of the grant of the patent: **21.05.2025**
(21) Application number: 23199500.2
(22) Date of filing: 25.09.2023
(51) Int. Cl.: B60R 21/231

(54) **VEHICLE OCCUPANT RESTRAINT DEVICE**
FAHRZEUGINSASSEN-RÜCKHALTEVORRICHTUNG
DISPOSITIF DE RETENUE DES OCCUPANTS D'UN VÉHICULE

(30) Priority: 31.10.2022 JP 2022175009
(43) Date of publication of application: 01.05.2024
(73) Proprietor: TOYOTA JIDOSHA KABUSHIKI KAISHA, Toyota-shi, Aichi-ken, 471-8571 (JP)
(72) Inventor: HAYASHI, Shigeki, TOYOTA-SHI, AICHI-KEN, 471-8571 (JP)
(74) Representative: Cabinet Beau de Loménie

(56) References cited:
- JP-A- 2014 069 729
- US-A1- 2012 091 697
- US-A1- 2014 151 984

## Description

### BACKGROUND OF THE INVENTION

### 1. Field of the Invention

The invention relates to a vehicle occupant restraint device.

### 2. Description of Related Art

A vehicle occupant restraint device is conventionally known in which a main bag portion of a far-side airbag is inflated and is deployed toward an inward side in a vehicle-width direction of an occupant seated in a vehicle seat, with a lower portion of the main bag portion being interposed between a console box and the abdomen of the occupant, and a sub-bag portion being inflated and deployed upward of the console box from an intermediate portion in an up-down direction of the main bag portion (e.g., see Japanese Unexamined Patent Application Publication No. 2014-069729 (JP 2014-069729 A)). In this vehicle occupant restraint device, when an occupant that is moving under inertia toward the inward side in the vehicle-width direction due to impact of a broadside collision is restrained by the main bag portion, the sub-bag portion is subjected to reactive force from an upper face of the console box, whereby the main bag portion is supported by the console box via the sub-bag portion.

### SUMMARY OF THE INVENTION

However, in the vehicle occupant restraint device configured as described above, when the main bag portion and the sub-bag portion that are deployed do not sufficiently overlap the console box in side view, in other words, when a vehicle seat assumes a front-side position in which a front end face of a side portion of a seat back thereof is positioned further toward a forward side than a front face of the console box, the occupant that moves toward the main bag portion under inertia is not subjected to sufficient reactive force from the console box via the sub-bag portion, and there is a possibility the occupant will fall toward a middle side in the vehicle-width direction.

In other words, in the case of an occupant with a small build who positions the vehicle seat at a front-side position, the main bag portion and the sub-bag portion that are deployed may turn inward in the vehicle-width direction with a rear end portion thereof as the center of turning in plan view, and restraining the occupant by the main bag portion and the sub-bag portion that are deployed may be difficult. Also, the main bag portion and the sub-bag portion that are deployed may turn toward a rearward side with a lower end portion thereof as the center of turning in side view, making it difficult to restrain the occupant with the main bag portion and the sub-bag portion that are deployed.

In this way, there is still room for improvement in a configuration in which behavior of turning of a side airbag that is inflated and is deployed from the side portion of the seat back of the vehicle seat on the inner side in the vehicle-width direction, toward an inward side of the occupant in the vehicle-width direction, is suppressed, even when the vehicle seat assumes a front-side position.

Accordingly, the invention provides a vehicle occupant restraint device in which behavior of turning of a side airbag that is inflated and is deployed inward of an occupant in the vehicle-width direction, from an inward side portion of a seat back in the vehicle-width direction, is suppressed even when the vehicle seat assumes a front-side position.

A first aspect of the invention provides a vehicle occupant restraint device. This vehicle occupant restraint device includes a vehicle seat that is provided in a vehicle cabin of a vehicle so as to be movable in a front-rear direction of the vehicle, a console box that is provided inside the vehicle cabin, on an inward side in a vehicle-width direction from the vehicle seat, an inflator that is provided in the vehicle seat and that is configured to discharge gas when activated, and a side airbag that includes a main chamber that is provided to a side portion of a seat back of the vehicle seat, on the inward side in the vehicle-width direction, and that is configured to inflate and deploy to the inward side in the vehicle-width direction of an occupant seated in the vehicle seat by the gas being supplied to inside of the main chamber, and a sub-chamber that is configured to inflated and be deployed to the inward side in the vehicle-width direction from a lower portion of the main chamber. When the vehicle seat assumes a front-side position at which a front end face of the side portion of the seat back is positioned further on a vehicle forward side than a front face of the console box in side view, the sub-chamber that is inflated and deployed is contactable with the front face of the console box from the vehicle forward side.

According to the invention of the first aspect, at the time of a broadside collision of the vehicle, the inflator is activated and gas discharged from the inflator is supplied to inside of the side airbag. Thus, the main chamber of the side airbag is inflated and is deployed to the inward side in the vehicle-width direction of the occupant seated in the vehicle seat, and the sub-chamber of the side airbag is inflated and is deployed to the inward side in the vehicle-width direction from the lower portion of the main chamber. Note that the expression "at the time of a broadside collision of the vehicle" includes not only when a broadside collision of the vehicle is detected, but also when a broadside collision of the vehicle is predicted.

Now, when the occupant seated in the vehicle seat (the driver seat in particular) is an occupant of small build, the vehicle seat assumes a front-side position in which the front end face of the side portion of the seat back is positioned further toward the vehicle forward side than the front face of the console box in side view. At this time, the sub-chamber that is inflated and deployed can come into contact with the front face of the console box from the vehicle forward side.

Accordingly, even when the main chamber of the side airbag does not sufficiently overlap the console box in side view, the sub-chamber is supported from a vehicle rearward side by the console box, and accordingly behavior of turning toward the inner side in the vehicle-width direction with the rear end portion of the side airbag as the center of turning in plan view is suppressed. That is to say, even when the vehicle seat assumes the front-side position, the behavior of turning of the side airbag that is inflated and is deployed from the side portion of the seat back on the inward side in the vehicle-width direction toward the inward side of the occupant in the vehicle-width direction is suppressed.

Further, in the vehicle occupant restraint device of the aspect described above, a lid portion of the console box may be provided with an overhang portion that protrudes further toward the vehicle forward side than the front face of the console box.

According to the invention of the above aspect, the lid portion of the console box is formed with the overhang portion projecting further toward the vehicle forward side than the front face of the console box. Accordingly, even though the main chamber of the side airbag does not sufficiently overlap the console box in side view, an upper side of a rear end portion of the sub-chamber is caught by the overhang portion and is pressed from a vehicle upward side, and thus the behavior of turning toward the vehicle rearward side with the lower end portion of the side airbag as the center of turning is suppressed.

Further, in the vehicle occupant restraint device of the aspect described above, an upper face of the sub-chamber may be positioned at a same position as or a lower position than a lower face of the overhang portion in side view.

According to the invention of the above aspect, the upper face of the sub-chamber is positioned at the same position as or a lower position than the lower face of the overhang portion in side view. Accordingly, even though the main chamber of the side airbag does not sufficiently overlap the console box in side view, the upper side of the rear end portion of the sub-chamber is readily caught by the overhang portion and is pressed from the vehicle upward side in a more sure manner, and thus the behavior of turning toward the vehicle rearward side with the lower end portion of the side airbag as the center of turning is suppressed in a more sure manner.

Also, in the vehicle occupant restraint device according to the above aspect, a height of a rear end portion of the sub-chamber may be the same as or lower than a height of the front face of the console box in side view.

Also, in the vehicle occupant restraint device of the above aspect, a stepped portion may be provided on an upper side of the rear end portion of the sub-chamber that is inflated and deployed, in side view.

According to the invention of the above aspect, the height of the rear end portion of the sub-chamber is formed at the same height as or lower than the height of the front face of the console box in side view. Accordingly, even though the main chamber of the side airbag does not sufficiently overlap the console box in side view, the upper side of the rear end portion of the sub-chamber is readily caught by the overhang portion and is pressed from the vehicle upward side in a more sure manner, and thus the behavior of turning toward the vehicle rearward side with the lower end portion of the side airbag as the center of turning is suppressed in a more sure manner.

Also, in the vehicle occupant restraint device of the above aspect, the console box may include a lid portion that is configured to move to the vehicle forward side in coordination with movement of the vehicle seat to the vehicle forward side, and the sub-chamber may be contactable with a lower face of the lid portion that is moved.

According to the invention of the above aspect, the console box has the lid portion that moves toward the vehicle forward side in coordination with the movement of the vehicle seat toward the vehicle forward side. Also, the sub-chamber can come into contact with the lower face of the lid portion that is moved. Accordingly, even though the main chamber of the side airbag does not sufficiently overlap the console box in side view, the sub-chamber is pressed from the vehicle upward side by the lid portion that is moved, and thus the behavior of turning toward the vehicle rearward side with the lower end portion of the side airbag as the center of turning can be suppressed.

Further, in the vehicle occupant restraint device of the above aspect, the sub-chamber may be supplied with the gas via a communication hole formed in the lower portion of the main chamber, and may be configured to be inflated and deployed with a delay as to the main chamber.

According to the invention of the above aspect, the sub-chamber is supplied with the gas through the communication hole formed in the lower portion of the main chamber and is inflated and is deployed with a delay as to the main chamber. Now, when the occupant seated in the vehicle seat (the driver seat in particular) is an occupant of large build, the vehicle seat assumes a rear-side position in which the front end face on the side portion of the seat back is positioned further to the vehicle rearward side than the front face of the console box in side view. That is to say, the main chamber of the side airbag sufficiently overlaps the console box in side view, and a gap between the console box and the occupant is narrow. However, as described above, the sub-chamber is inflated and is deployed with a delay as to the main chamber, and accordingly the side airbag (main chamber) having the sub-chamber can be inflated and be deployed, even when the gap is narrow.

In a non-claimed example, there is provided a vehicle occupant restraint device that includes a vehicle seat that is provided in a vehicle cabin of a vehicle so as to be movable in a front-rear direction of the vehicle, a console box that is provided inside the vehicle cabin, on an inward side in a vehicle-width direction from the vehicle seat, and that includes a lid portion that is configured to move to a vehicle forward side in coordination with movement of the vehicle seat to the vehicle forward side, an inflator that is provided in the vehicle seat and that is configured to discharge gas when activated, and a side airbag that includes a main chamber that is provided to a side portion of a seat back of the vehicle seat, on the inward side in the vehicle-width direction, and that is configured to be inflated and be deployed to the inward side in the vehicle-width direction of an occupant seated in the vehicle seat by the gas being supplied to inside of the main chamber, and a sub-chamber that is configured to be inflated and be deployed to the inward side in the vehicle-width direction from a lower portion of the main chamber. The sub-chamber is contactable with a lower face of the lid portion that is moved.

According to that example, at the time of a broadside collision of the vehicle, the inflator is activated and gas discharged from the inflator is supplied to the inside of the side airbag. Thus, the main chamber of the side airbag is inflated and is deployed toward the inward side in the vehicle-width direction of the occupant seated in the vehicle seat, and the sub-chamber of the side airbag is inflated and is deployed to the inward side in the vehicle-width direction from the lower portion of the main chamber. Note that the expression "at the time of a broadside collision of the vehicle" includes not only when a broadside collision of the vehicle is detected, but also when a broadside collision of the vehicle is predicted.

Now, the console box has the lid portion that moves toward the vehicle forward side in coordination with the movement of the vehicle seat toward the vehicle forward side. Also, the sub-chamber can come into contact with the lower face of the lid portion that is moved. Accordingly, even though the main chamber of the side airbag does not sufficiently overlap the console box in side view, the sub-chamber is pressed from the vehicle upward side by the lid portion that is moved, and thus the behavior of turning toward the vehicle rearward side with the lower end portion of the side airbag as the center of turning can be suppressed. That is to say, even when the vehicle seat assumes the front-side position, the behavior of turning of the side airbag that is inflated and is deployed from the side portion of the seat back on the inward side in the vehicle-width direction toward the inward side of the occupant in the vehicle-width direction is suppressed.

Thus, according to the invention, behavior of turning of the side airbag that is inflated and is deployed toward the inward side of an occupant in the vehicle-width direction, from the side portion of the seat back on the inward side in the vehicle-width direction, can be suppressed even when the vehicle seat assumes a front-side position.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic side view illustrating an inflated and deployed state of a side airbag when a vehicle seat in a vehicle occupant restraint device according to a first embodiment is positioned at a front-side position;
FIG. 2 is a schematic plan view illustrating the inflated and deployed state of the side airbag when the vehicle seat in the vehicle occupant restraint device according to the first embodiment is positioned at the front-side position;
FIG. 3 is a schematic enlarged side view illustrating an inside of the side airbag of the vehicle occupant restraint device according to the first embodiment in a partial cross-section;
FIG. 4 is a schematic enlarged plan view illustrating the inside of the side airbag of the vehicle occupant restraint device according to the first embodiment in a cross-section;
FIG. 5A is a schematic enlarged side view illustrating a shape (circular shape) of a communication hole formed in a main chamber of the side airbag of the vehicle occupant restraint device according to the first embodiment;
FIG. 5B is a schematic enlarged side view illustrating a shape (slit shape) of the communication hole formed in the main chamber of the side airbag of the vehicle occupant restraint device according to the first embodiment;
FIG. 6 is a schematic enlarged side view illustrating a first modification of a sub-chamber in the side airbag of the vehicle occupant restraint device according to the first embodiment;
FIG. 7 is a schematic enlarged side view illustrating a second modification of a sub-chamber in the side airbag of the vehicle occupant restraint device according to the first embodiment;
FIG. 8 is a schematic side view illustrating the inflated and deployed state of the side airbag when the vehicle seat in the vehicle occupant restraint device according to the first embodiment is positioned at a rear-side position;
FIG. 9 is a schematic plan view illustrating the inflated and deployed state of the side airbag when the vehicle seat in the vehicle occupant restraint device according to the first embodiment is positioned at the rear-side position;
FIG. 10 is a schematic side view illustrating a state before a lid portion of a console box of a vehicle occupant restraint device according to a non-claimed second embodiment moves together with a vehicle seat; and
FIG. 11 is a schematic side view illustrating a state after the lid portion of the console box of the vehicle occupant restraint device according to the non-claimed second embodiment is moved together with the vehicle seat.

### DETAILED DESCRIPTION OF EMBODIMENTS

Embodiments of the invention will be described below in detail with reference to the drawings. For convenience of description, an arrow UP, an arrow FR, and an arrow LH shown in the figures as appropriate indicate an upward direction of a vehicle and a vehicle seat, a forward direction of the vehicle and the vehicle seat, and a leftward direction of the vehicle and the vehicle seat, respectively. Accordingly, when terms indicating directions, i.e., up-down, front-rear, and right-left are used in the following description without any specification, these are to be understood to mean up-down, front-rear, and right-left, with respect to the vehicle and the vehicle seat. Also, "right-left direction" is synonymous with "vehicle-width direction" and "seat-width direction".

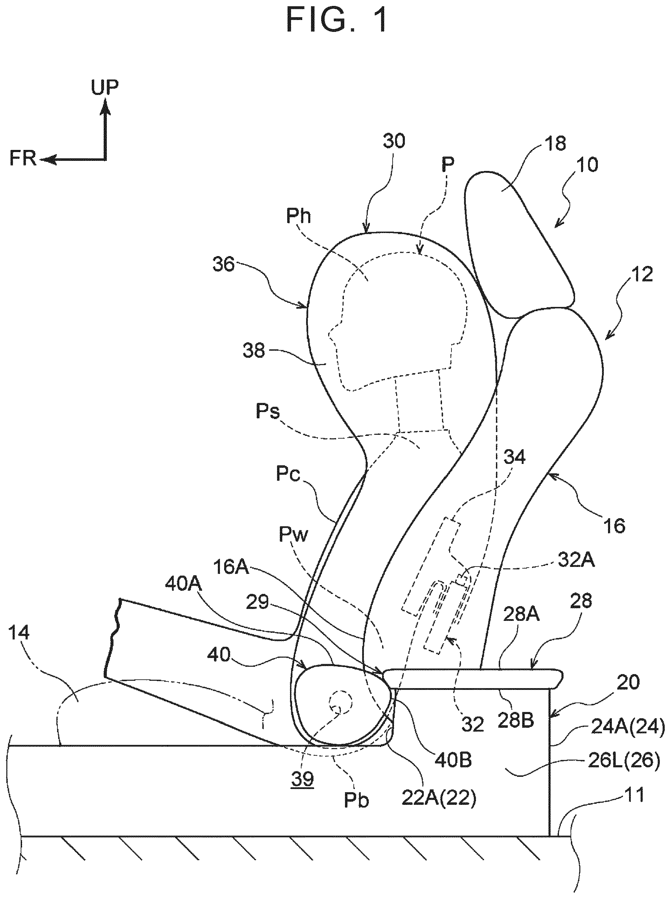

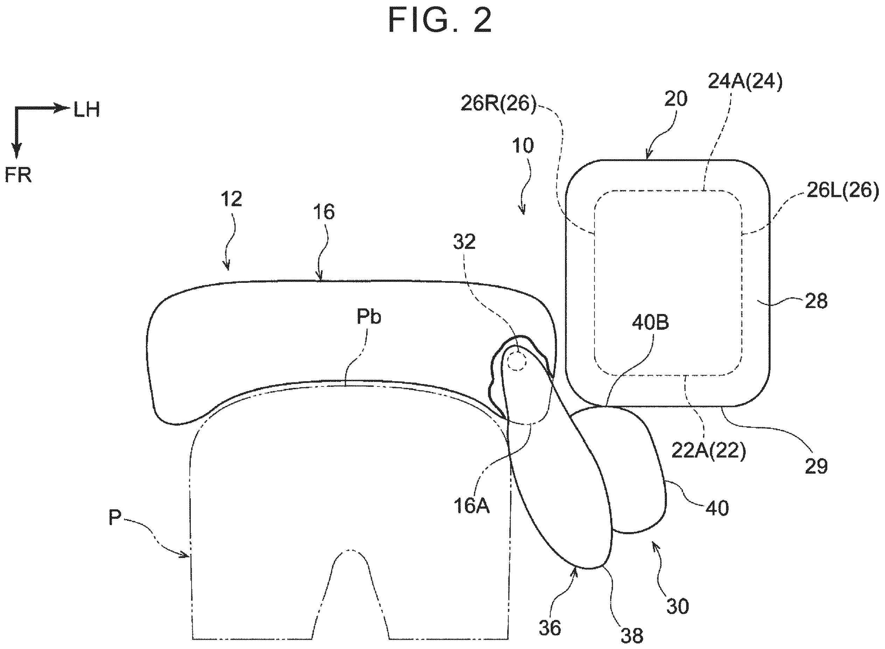

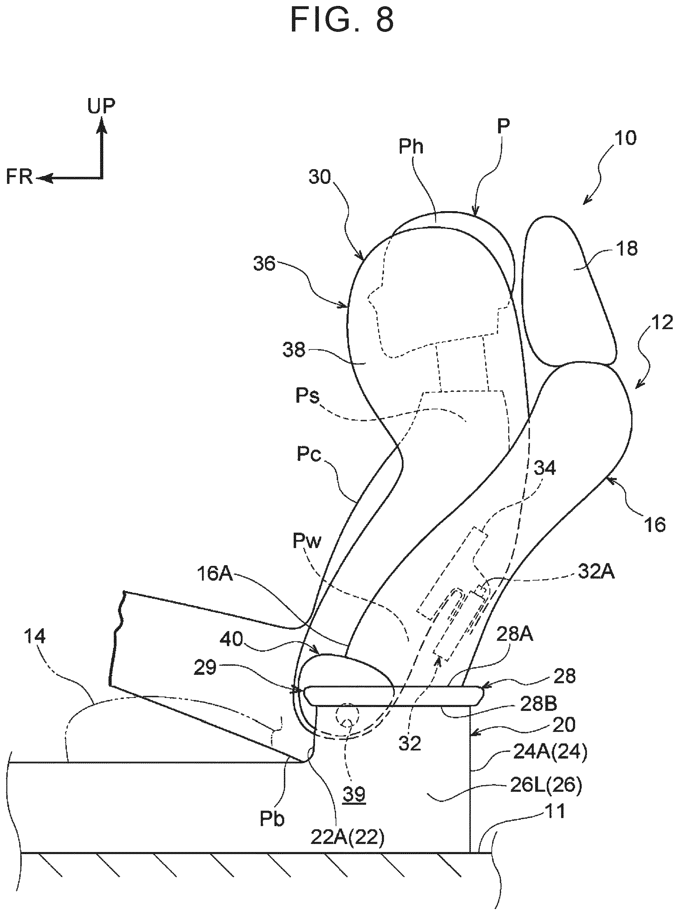

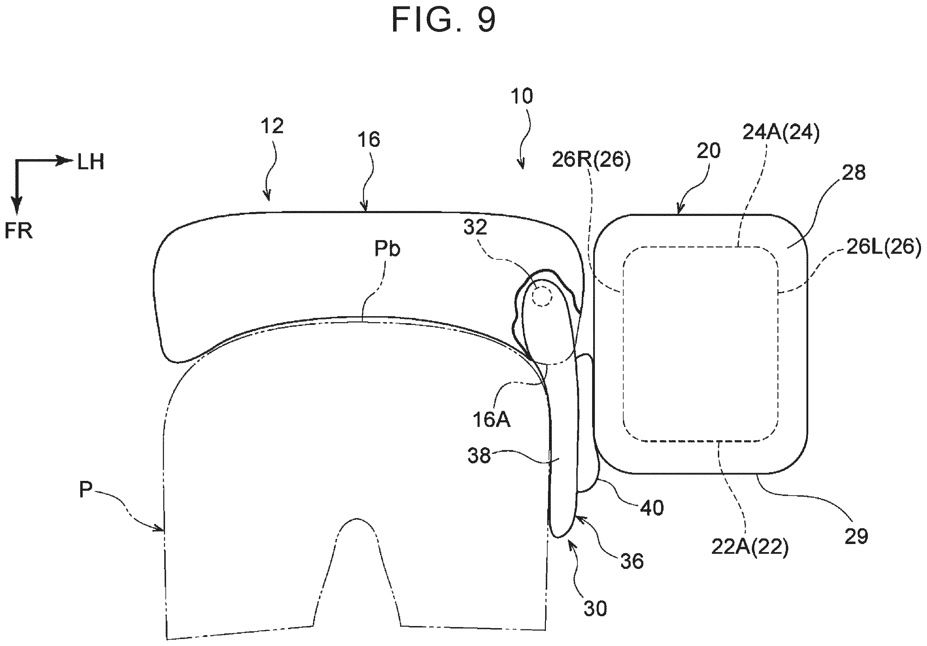

An "occupant P" illustrated in FIGS. 1 and 2 is, for example, an occupant equivalent to AF05 (5th percentile American adult female) in Worldwide Harmonized Side Impact Dummy (World SID). The "occupant P" illustrated in FIGS. 8 and 9 is, for example, an occupant equivalent to AM95 (95th percentile American adult male) in World SID.

### First Embodiment

First, a first embodiment will be described. As illustrated in FIG. 1, a vehicle seat 12 making up a vehicle occupant restraint device 10 according to the first embodiment includes a seat cushion 14 on which the occupant P sits (supporting buttocks Pb and thighs of the occupant P), a seat back 16 that supports the back of the occupant P, and a headrest 18 that supports the head Ph of the occupant P. Note that this vehicle seat 12 is, for example, a right-side front seat provided in a vehicle cabin of a vehicle, and is configured to be movable in the front-rear direction by a known electrical mechanism.

In side view in the vehicle-width direction (seat-width direction), the seat cushion 14 extends in the front-rear direction, and the seat back 16 is pivotably linked to a rear end portion the seat cushion 14 with the seat-width direction as an axial direction thereof, and extends in the up-down direction. The headrest 18 is provided at a middle portion of an upper end portion of the seat back 16 in the seat-width direction so as to be movable up and down. The occupant P is restrained in the vehicle seat 12 by a seatbelt device (omitted from illustration).

Further, as illustrated in FIGS. 1 and 2, a console box 20 is provided on a floor 11 (see FIG. 1) of the vehicle cabin, on an inward side in the vehicle-width direction (middle portion in the vehicle-width direction) from the vehicle seat 12. The console box 20 is a rectangular hollow box of which a longitudinal direction thereof is in the front-rear direction in plan view. A front wall 22 and a rear wall 24 of the console box 20 have a front face 22A and a rear face 24A, respectively, which are flat faces, and right and left side walls 26 of the console box 20 respectively have side faces 26R and 26L, which are flat faces.

An upper portion of the console box 20 is open, and configured to be openable and closable by a lid portion 28 having a predetermined thickness. Note that a front end portion of the lid portion 28 of the console box 20 is formed as an overhang portion 29 projecting further toward the forward side than the front face 22A of the front wall 22 in side view by a predetermined length. Also, the height to an upper face 28A of the lid portion 28 of the console box 20 is such that the occupant P can rest his/her elbow (omitted from illustration) without assuming an unreasonable posture.

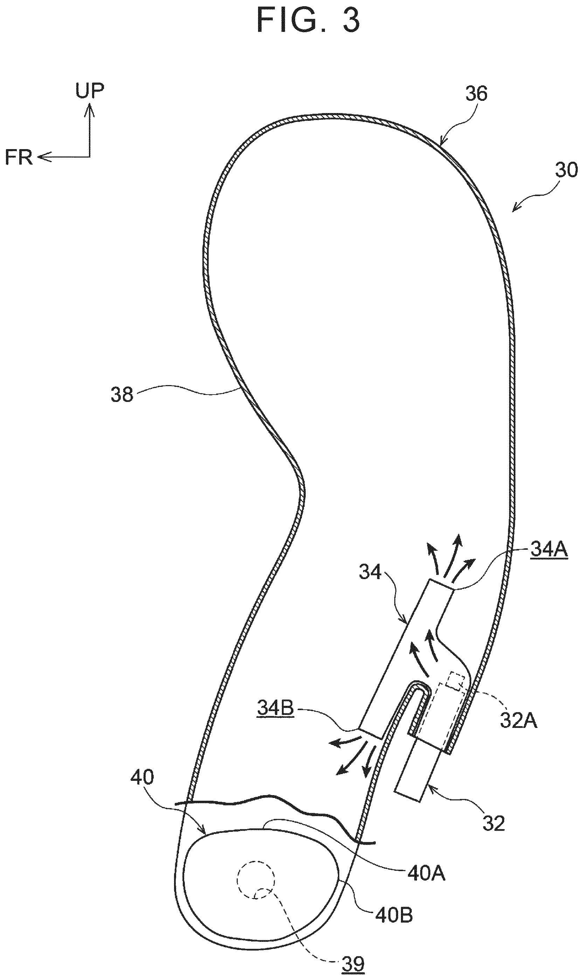

Also, a side airbag device 30 is provided on a left-side side portion (hereinafter referred to as "left side portion") that is a side portion of the seat back 16 on the inner side in the vehicle-width direction. As illustrated in FIG. 3, the side airbag device 30 includes an inflator 32 embedded in the left side portion of the seat back 16, an inner cloth 34 for distributing gas discharged from the inflator 32 to an upward side and a downward side, and a side airbag 36 inside which the inner cloth 34 is provided.

The inflator 32 is a cylinder-type gas generating device formed in a substantially cylindrical shape, and an axial direction thereof is a direction following a side frame (omitted from illustration) that makes up a framework on both right and left side portions of the seat back 16 (substantially up-down direction). The inflator 32 is actuated when a broadside collision of the vehicle is detected or predicted (hereinafter referred to as "time of broadside collision"), and gas can be instantaneously supplied to the inside of the side airbag 36 via the inner cloth 34.

To describe this in detail, a lower end portion at a rearward side of the inner cloth 34 is connected to an upper end portion 32A of the inflator 32. A forward side of the inner cloth 34 is formed in a tubular shape of which an axial direction is substantially the up-down direction, and that has an upper opening 34A and a lower opening 34B. Accordingly, the inner cloth 34 is capable of blowing out the gas discharged from the inflator 32 to the upward side and the downward side, inside of the side airbag 36. According to this structure, the side airbag 36 is rapidly inflated and deployed.

The side airbag 36 is provided on the left side portion of the seat back 16, and has a main chamber 38 that is inflated and is deployed to the inward side in the vehicle-width direction of the buttocks Pb, the lumbar region Pw, the chest Pc, the shoulders Ps, and the head Ph of the occupant P seated in the vehicle seat 12, and a sub-chamber 40 that is inflated and is deployed to the inward side in the vehicle-width direction from a lower portion of the main chamber 38, by gas being supplied therein.

As illustrated in FIG. 1, the main chamber 38 extends from an upper end portion of the headrest 18 to a lower end portion of the seat back 16 (reaching the seat cushion 14) in side view, and an upper portion thereof is formed in a substantially elliptical shape that bulges to the forward side so as to be able to restrain the head Ph of the occupant P. The main chamber 38 is formed in the shape of a single bag, by sewing outer peripheral edges of two pieces of base fabric together.

The sub-chamber 40 is formed in a substantially elliptical shape that is long in the front-rear direction in side view, and the length thereof in the front-rear direction is of a level so as not to extend out from the main chamber 38. The length (height) of the sub-chamber 40 in the up-down direction is a length (height) such that an upper face 40A of the sub-chamber 40 is positioned at substantially the same position as the upper face 28A of the lid portion 28 of the console box 20 in side view.

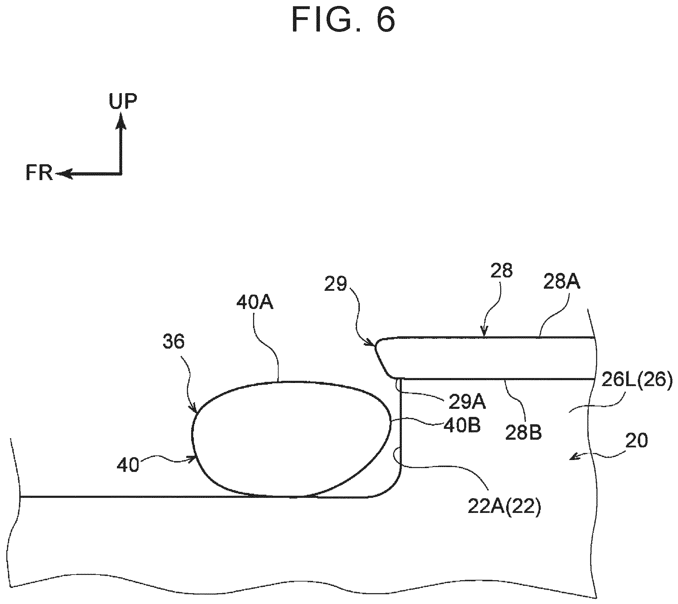

Note that as illustrated in FIG. 6, the length (height) of the sub-chamber 40 in the up-down direction preferably is a length (height) such that the upper face 40A of the sub-chamber 40 is at the same position as a lower face 29A of the overhang portion 29, or positioned at a lower position therefrom, in side view. In other words, the length of the sub-chamber 40 in the up-down direction (at least the height of a rear end portion 40B) is preferably formed at the same height as the height of the front face 22A of the front wall 22 of the console box 20, or lower than the height thereof, in side view.

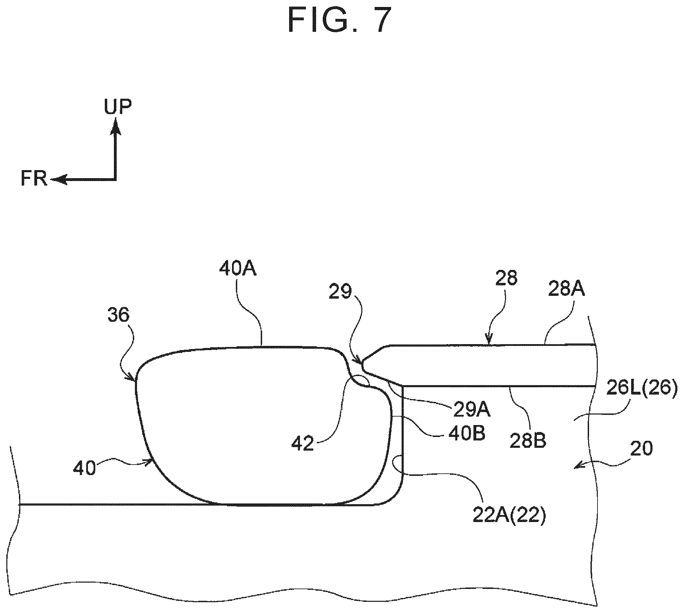

Further, as illustrated in FIG. 7, a stepped portion 42 having a substantially "letter-L" shape may be formed on an upper side of the rear end portion 40B of the sub-chamber 40 in side view, after completion of inflation and deployment. In this case, the length (height) of the rear end portion 40B of the sub-chamber 40 in the up-down direction (up to the stepped portion 42) is preferably formed to be the same as the height of the front face 22A of the front wall 22 of the console box 20, or lower than the height thereof, in side view.

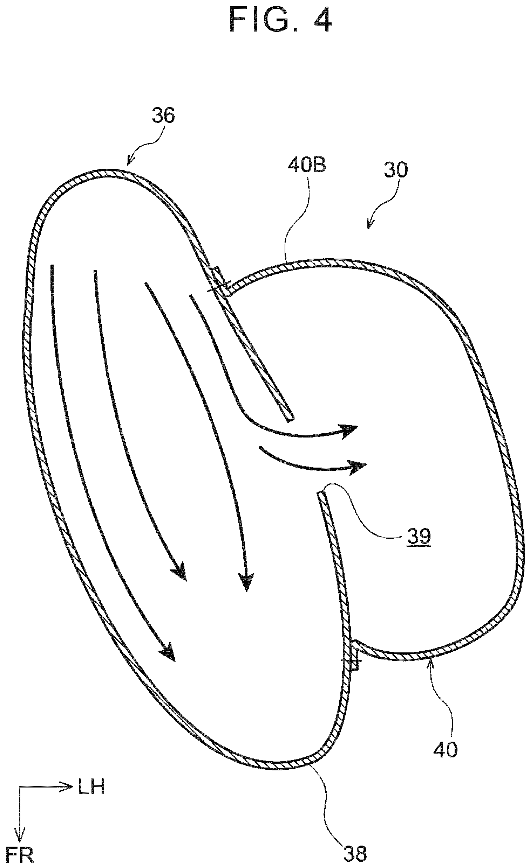

Further, as illustrated in FIG. 4, the sub-chamber 40 is formed in a bag-like shape by sewing an outer peripheral edge thereof to the lower portion of the base fabric of the main chamber 38 on the inward side in the vehicle-width direction, and is configured to be inflated and to be deployed to a predetermined thickness on the inward side in the vehicle-width direction from the base fabric of the main chamber 38 on the inward side in the vehicle-width direction.

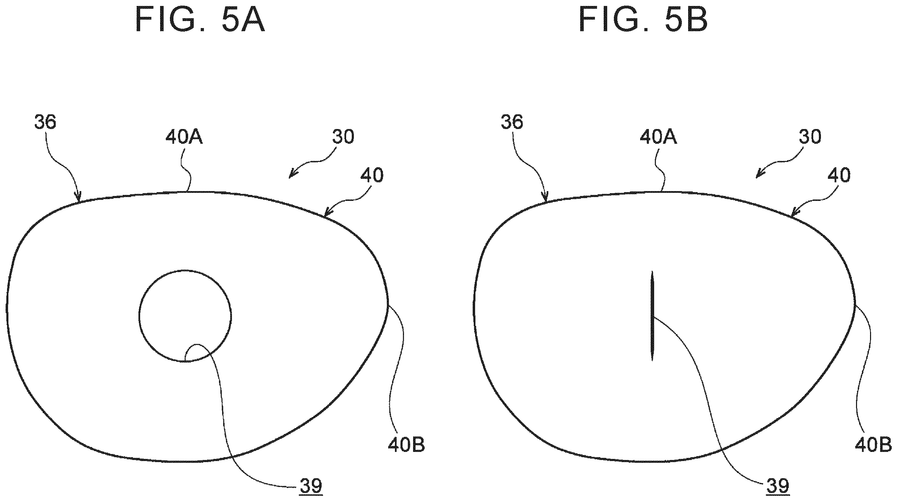

Also, as illustrated in FIGS. 5A and 5B, a communication hole 39 is formed in the lower portion of the base fabric on the inward side of the main chamber 38 in the vehicle-width direction, to allow the main chamber 38 and the sub-chamber 40 to communicate with each other. The communication hole 39 is formed, for example, in a circular shape such as illustrated in FIG. 5A or a slit shape such as illustrated in FIG. 5B, whereby gas is supplied from the main chamber 38 to the sub-chamber 40 via the communication hole 39.

Note that when the communication hole 39 has a circular shape, the inflation and deployment speed of the sub-chamber 40 is faster than when the communication hole 39 has a slit shape with the same length as the diameter of the circle. Further, when the communication hole 39 is formed in a slit shape, this is not limited to the upright long slit shape illustrated in FIG. 5B, and may be, for example, a laterally long slit shape, or may be a diagonally long slit shape. In any case, the communication hole 39 that is circular or slit-shaped in this way allows the sub-chamber 40 to be inflated and be deployed to a predetermined thickness, with a delay from the inflation and deployment of the main chamber 38.

As illustrated in FIGS. 1 and 2, in the sub-chamber 40, when the vehicle seat 12 assumes a front-side position, in which a front end face (an end face positioned at the foremost side) 16A on a lower side of the side portion of the seat back 16 in side view is positioned further toward the forward side than the front face 22A of the front wall 22 of the console box 20, such as in the case of an occupant P with a small build, the rear end portion 40B of the sub-chamber 40, which is inflated and is deployed, is contactable with the front face 22A of the front wall 22 of the console box 20 from the forward side.

Note that the term "is contactable" as used here means that when at least the main chamber 38 of the side airbag 36 pivots rearward toward the inward side in the vehicle-width direction, with the rear end portion thereof as the center of turning (with the inflator 32 side as a pivoting point), the rear end portion 40B of the sub-chamber 40, which is inflated and is deployed, comes into contact with the front face 22A of the console box 20 from the forward side, as illustrated in FIG. 2. Accordingly, at the point in time of the sub-chamber 40 being inflated and deployed, the case in which the rear end portion 40B is in contact with the front face 22A of the console box 20 from the forward side is also included in "capable of coming into contact".

As illustrated in FIGS. 8 and 9, when the vehicle seat 12 assumes a rear-side position, in which the front end face 16A on the lower side of the side portion of the seat back 16 in side view is positioned further on the rearward side from the front face 22A of the front wall 22 of the console box 20, such as in the case of an occupant P with a large build, or the like, the lower portion of the main chamber 38 and the sub-chamber 40 are capable of being interposed between the side face 26R of the wall 26 on the right side of the console box 20, and the buttocks Pb of the occupant P. That is to say, in this case, the sub-chamber 40 is inflated and is deployed only to the extent of filling a gap between the lower portion of the main chamber 38 and the side face 26R on the right side of the console box 20.

Next, the operation of the vehicle occupant restraint device 10 according to the first embodiment having the above configuration will be described.

In the event of a broadside collision of the vehicle, the inflator 32 is actuated, and the gas discharged from the inflator 32 is instantaneously supplied to the inside of the inner cloth 34, and is supplied to the inside of the side airbag 36 (main chamber 38) from the upper opening 34A and the lower opening 34B of the inner cloth 34. Then, under internal pressure (inflation pressure) of the side airbag 36, which begins to inflate due to the supplied gas, a skin ruptures from the lower end portion to the upper end portion at the left side portion of the seat back 16.

That is to say, the main chamber 38 of the side airbag 36 is inflated and is deployed toward the left side (inward in the vehicle-width direction) of the buttocks Pb, the lumbar region Pw, the chest Pc, the shoulders Ps, and the head Ph of the occupant P. Accordingly, the left side face of the occupant P is covered by the main chamber 38 from the left side, from the head Ph to the buttocks Pb. Thus, the left side face of the occupant P, from the head Ph to the buttocks Pb, can be restrained by the main chamber 38 in the event of a broadside collision of the vehicle.

Also, the sub-chamber 40 of the side airbag 36 is inflated and is deployed toward the inward side in the vehicle-width direction from the lower portion of the main chamber 38, following a delay from the inflation and deployment of the main chamber 38. Here, as illustrated in FIG. 1, when the occupant P seated in the vehicle seat 12 (the driver seat in particular) is an occupant of small build, the vehicle seat 12 assumes the front-side position in which the front end face 16A on the lower side of the side portion of the seat back 16 is positioned further toward the forward side than the front face 22A of the console box 20 in side view. At this time, the sub-chamber 40 that is inflated and is deployed can come into contact with the front face 22A of the console box 20 from the forward side.

Accordingly, even when the main chamber 38 of the side airbag 36 does not sufficiently overlap the console box 20 (even when the main chamber 38 of the side airbag 36 is offset to the forward side) in side view, the rear end portion 40B of the sub-chamber 40 is supported from the rear side by the front face 22A of the console box 20, and accordingly the behavior of turning rearward toward the inner side in the vehicle-width direction with the rear end portion of the side airbag 36 as the center of turning (with the inflator 32 side as the pivoting point) can be suppressed.

Also, the front end portion of the lid portion 28 of the console box 20 is formed with the overhang portion 29 projecting further to the forward side than the front face 22A of the console box 20. Accordingly, even though the main chamber 38 of the side airbag 36 does not sufficiently overlap the console box 20 in side view, the upper side of the rear end portion 40B of the sub-chamber 40 is caught by the overhang portion 29 and is pressed from above, and thus the behavior of turning toward the rearward side with a lower end portion of the side airbag 36 as the center of turning can be suppressed as well.

Thus, even when the vehicle seat 12 assumes the front-side position, the behavior of turning of the side airbag 36 that is inflated and is deployed from the left side portion of the seat back 16 toward the inward side of the occupant P in the vehicle-width direction can be suppressed. Accordingly, restraint performance can be secured with respect to an occupant P of small build who is seated in the vehicle seat 12 that assumes the front-side position.

Note that, as illustrated in FIG. 6, the upper face 40A of the sub-chamber 40 is preferably positioned at the same position as or lower than the lower face 29A of the overhang portion 29 in side view. In other words, the height of the sub-chamber 40 in the up-down direction (at least the height of the rear end portion 40B) is preferably formed at the same height as the height of the front face 22A of the console box 20, or lower than the height thereof, in side view.

Accordingly, even though the main chamber 38 of the side airbag 36 does not sufficiently overlap the console box 20 in side view, the upper side of the rear end portion 40B of the sub-chamber 40 is readily caught by the overhang portion 29 over a broad range and is pressed from above in an even more sure manner, and thus the behavior of turning toward the rearward side with the lower end portion of the side airbag 36 as the center of turning can be suppressed in an even more sure manner.

Also, as illustrated in FIG. 7, the stepped portion 42 may be formed on the upper side of the rear end portion 40B of the sub-chamber 40 in side view. In this case, the height of the rear end portion 40B of the sub-chamber 40 (the height up to the stepped portion 42) is preferably formed to be the same as the height of the front face 22A of the console box 20, or lower than the height thereof, in side view.

Accordingly, even when the main chamber 38 of the side airbag 36 does not sufficiently overlap the console box 20 in side view, the upper side of the rear end portion 40B of the sub-chamber 40 is readily caught by the overhang portion 29 over a broad range and is pressed from above in an even more sure manner, in the same way as described above, and thus the behavior of turning toward the rearward side with the lower end portion of the side airbag 36 as the center of turning can be suppressed in an even more sure manner.

Also, the sub-chamber 40 is supplied with gas through the communication hole 39 formed in the lower portion of the main chamber 38 and is inflated and is deployed with a delay as to the main chamber 38. Now, as illustrated in FIG. 8, when the occupant P seated in the vehicle seat 12 (the driver seat in particular) is an occupant of large build, the vehicle seat 12 assumes the rear-side position in which the front end face 16A on the lower side of the side portion of the seat back 16 is positioned further toward the rearward side than the front face 22A of the console box 20 in side view.

That is to say, the main chamber 38 of the side airbag 36 sufficiently overlaps the console box 20 in side view, and the gap between the side face 26R on the right side of the console box 20 and the buttocks Pb of the occupant P is narrow. However, as described above, the sub-chamber 40 is inflated and is deployed with a delay as to the main chamber 38, and accordingly the side airbag 36 (main chamber 38) having the sub-chamber 40 can be easily inflated and deployed, even when the gap is narrow.

Moreover, the communication hole 39 is formed in a circular shape or a slit shape. Accordingly, a deployment completion time of the sub-chamber 40 can be adjusted with a simpler configuration, as compared with when the communication hole 39 is not formed in a circular shape or a slit shape. That is to say, the deployment completion time of the sub-chamber 40 can be easily adjusted by adjusting the inner diameter of the circle or the length of the slit, so as to be later than an inflation and deployment completion time of the main chamber 38.

### Second Embodiment

Next, a second embodiment will be described. Note that the same parts as those in the above first embodiment are denoted by the same reference signs, and detailed description thereof (including common operations) will be omitted as appropriate.

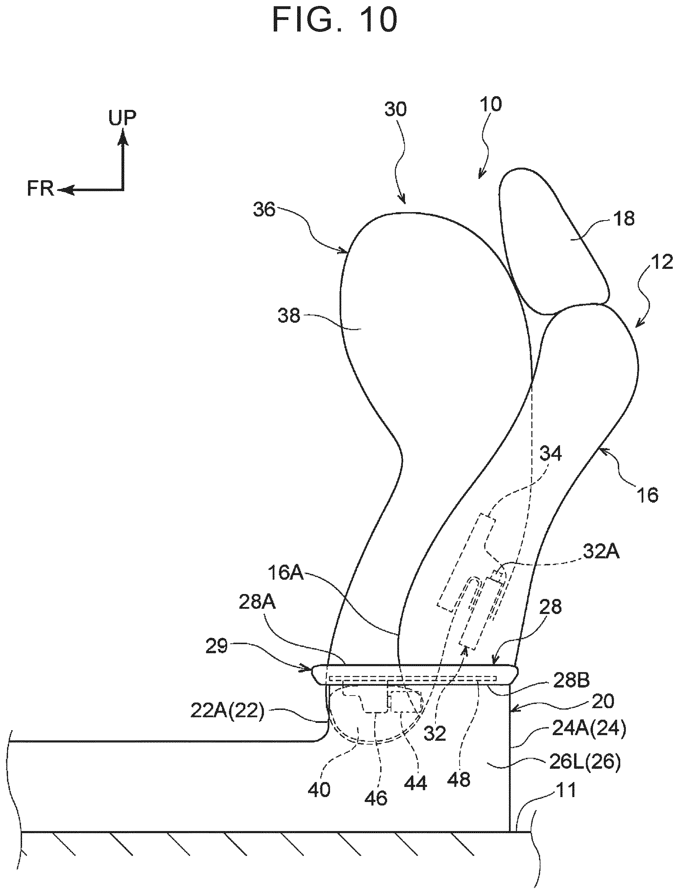

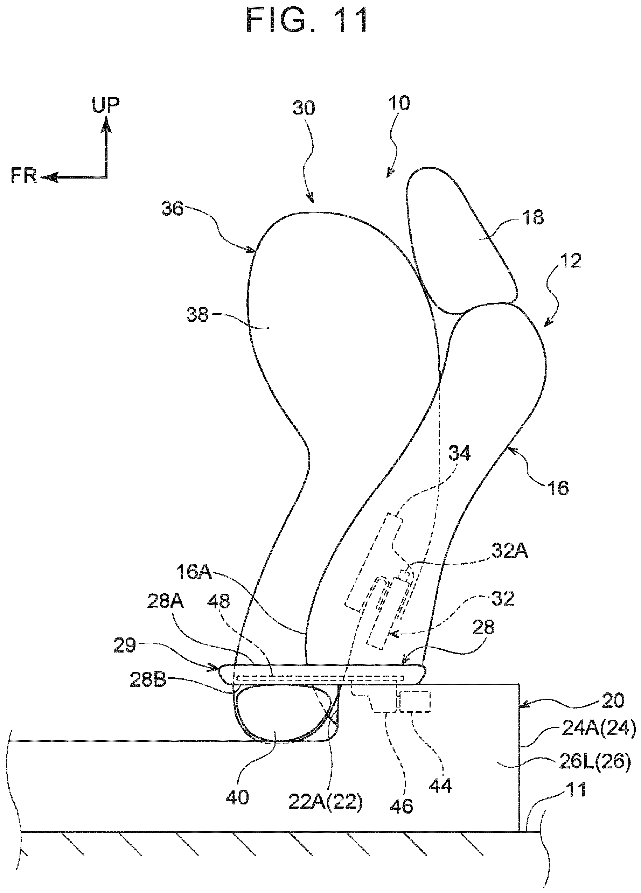

As illustrated in FIGS. 10 and 11, this second embodiment differs from the first embodiment only with respect to a point that lid portion 28 of the console box 20 moves to the forward side in conjunction with movement of the vehicle seat 12 to the forward side, and the sub-chamber 40 can come into contact with a lower face 28B of the lid portion 28 that is moved to the forward side.

To describe this in detail, an electric motor 44 and a pinion 46 that is rotationally driven by the electric motor 44 are provided at one end side in the vehicle-width direction at an upper front side inside the console box 20. A rack 48 that meshes with the pinion 46 is provided on one end side of the lower face of the lid portion 28 in the vehicle-width direction. The electric motor 44 is also electrically connected to a control device (omitted from illustration) that controls an electric mechanism that moves the vehicle seat 12.

According to such a configuration, when the vehicle seat 12 is moved to the forward side by driving the electric mechanism under the control of the control device that receives a switch operation by the occupant P, the electric motor 44 is driven under the control of the control device, and the lid portion 28 of the console box 20 is moved to the forward side through the pinion 46 and the rack 48. Then, as described above, the sub-chamber 40 can come into contact with the lower face 28B of the lid portion 28 that is moved to the forward side.

Accordingly, even though the main chamber 38 of the side airbag 36 does not sufficiently overlap the console box 20 in side view (even when offset to the forward side), the sub-chamber 40 is pressed from above by the lid portion 28 that is moved to the forward side, and thus the behavior of turning toward the rearward side with the lower end portion of the side airbag 36 as the center of turning can be suppressed.

Also, the main chamber 38 of the side airbag 36 sufficiently overlaps the lid portion 28 that is moved to the forward side (the overhang portion 29 that is the front end portion of the lid portion 28 protrudes further to the forward side than a front end face at the lower portion of the main chamber 38), in side view. Accordingly, in plan view, the lid portion 28 can also suppress the behavior of turning rearward toward the inward side in the vehicle-width direction with the rear end portion of the side airbag 36 as the center of turning (with the inflator 32 side as the pivoting point).

Thus, even when the vehicle seat 12 assumes the front-side position, the behavior of turning of the side airbag 36 that is inflated and is deployed from the left side portion of the seat back 16 toward the inward side of the occupant P in the vehicle-width direction can be suppressed. Accordingly, restraint performance can be secured with respect to an occupant P of small build who is seated in the vehicle seat 12 that assumes the front-side position.

The sub-chamber 40 can come into contact with the lower face 28B of the lid portion 28 of the console box 20 in this configuration, and accordingly the lid portion 28 can contribute to stabilizing the inflated and deployed position of the sub-chamber 40 as well. Also, the lid portion 28 sufficiently overlaps the main chamber 38 of the side airbag 36, and thus can contribute to imparting reactive force to the main chamber 38.

Also, the movement of the lid portion 28 of the console box 20 to the forward side is not limited to a configuration that is coordinated with the movement of the vehicle seat 12 to the forward side. For example, the vehicle seat 12 may be provided with a measuring device capable of measuring the body weight, and the measuring device may be electrically connected to the control device, although this configuration is omitted from illustration. Accordingly, when the weight of the occupant P seated in the vehicle seat 12 is lighter than a predetermined weight, the control device determines that the occupant P is of small build, and can drive the electric motor 44 so as to move the lid portion 28 to the forward side in advance.

Also, for example, a camera for taking images of the occupant P may be provided in the vehicle cabin, and the camera and the control device may be electrically connected, although this configuration is omitted from illustration. Accordingly, images are taken of the occupant P seated in the vehicle seat 12 by the camera, and when the outer form of the occupant P is smaller than a predetermined outer form, the control device determines that the occupant P is of small build, and can drive the electric motor 44 so as to move the lid portion 28 to the forward side in advance.

The vehicle occupant restraint device 10 according to the present embodiment has been described above with reference to the drawings, but the vehicle occupant restraint device 10 according to the present embodiment is not limited to the illustrated arrangements, and the design thereof can be changed as appropriate within the scope of the invention. For example, the shape of the communication hole 39 is not limited to the circular shape illustrated in FIG. 5A, and may be formed in a triangular shape, a rectangular shape, or the like.

Also, the overhang portion 29 does not have to be formed on the lid portion 28 of the console box 20, and the height of the sub-chamber 40 may be such that the upper face 40A thereof is of a height exceeding the upper face 28A of the lid portion 28 of the console box 20 in side view. In this case, at least the rear end portion 40B of the sub-chamber 40 is supported from the rearward side by the front face 22A of the console box 20, and accordingly the rearward behavior of turning toward the inward side in the vehicle-width direction with the rear end portion of the side airbag 36 as the center of turning (with the inflator 32 side as the pivoting point) in plan view can be suppressed.

## Claims

1. A vehicle occupant restraint device (10), comprising:
a vehicle seat (12) that is provided in a vehicle cabin of a vehicle so as to be movable in a front-rear direction of the vehicle;
a console box (20) that is provided inside the vehicle cabin, on an inward side in a vehicle-width direction from the vehicle seat (12);
an inflator (32) that is provided in the vehicle seat (12) and that is configured to discharge gas when activated; and
a side airbag (36) that includes
a main chamber (38) that is provided to a side portion of a seat back (16) of the vehicle seat (12), on the inward side in the vehicle-width direction, and that is configured to be inflated and deployed to the inward side in the vehicle-width direction of an occupant (P) seated in the vehicle seat (12) by the gas being supplied to inside of the main chamber (38), and
a sub-chamber (40) that is configured to be inflated and deployed to the inward side in the vehicle-width direction from a lower portion of the main chamber (38),
**characterized in that**, when the vehicle seat (12) assumes a front-side position at which a front end face (16A) of the side portion of the seat back (16) is positioned further on a vehicle forward side than a front face (22A) of the console box (20) in side view, the sub-chamber (40) that is inflated and deployed is contactable with the front face (22A) of the console box (20) from the vehicle forward side.

2. The vehicle occupant restraint device (10) according to claim 1, wherein a lid portion (28) of the console box (20) is provided with an overhang portion (29) that protrudes further toward the vehicle forward side than the front face (22A) of the console box (20).

3. The vehicle occupant restraint device (10) according to claim 2, wherein an upper face (40A) of the sub-chamber (40) is positioned at a same position as or a lower position than a lower face (29A) of the overhang portion (29) in the side view.

4. The vehicle occupant restraint device (10) according to claim 2 or 3, wherein a height of a rear end portion (40B) of the sub-chamber (40) is the same as or lower than a height of the front face (22A) of the console box (20) in the side view.

5. The vehicle occupant restraint device (10) according to claim 4, wherein a stepped portion (42) is provided on an upper side of the rear end portion (40B) of the sub-chamber (40) that is inflated and deployed, in the side view.

6. The vehicle occupant restraint device (10) according to any of claims 1 to 5, wherein:
the console box (20) includes a lid portion (28) that is configured to move to the vehicle forward side in coordination with movement of the vehicle seat (12) to the vehicle forward side; and
the sub-chamber (40) is contactable with a lower face (28B) of the lid portion (28) that is moved.

7. The vehicle occupant restraint device (10) according to any one of claims 1 to 6, wherein the sub-chamber (40) is supplied with the gas via a communication hole provided in the lower portion of the main chamber (38), and is configured to be inflated and deployed with a delay as to the main chamber (38).

## Patentansprüche

1. Fahrzeuginsassen-Rückhaltevorrichtung (10), umfassend:
einen Fahrzeugsitz (12), der in einer Fahrzeugkabine eines Fahrzeugs bereitgestellt ist, um in einer Vorwärts-Rückwärts-Richtung des Fahrzeugs beweglich zu sein;
einen Konsolenkasten (20), der auf einer einwärtigen Seite in einer Fahrzeugbreitenrichtung von dem Fahrzeugsitz (12) im Inneren der Fahrzeugkabine bereitgestellt ist;
eine Aufblaseinrichtung (32), die in dem Fahrzeugsitz (12) bereitgestellt und konfiguriert ist, um bei Aktivierung Gas zu entladen; und
einen Seitenairbag (36), der Folgendes beinhaltet
eine Hauptkammer (38), die an einem Seitenabschnitt einer Sitzlehne (16) des Fahrzeugsitzes (12) auf der einwärtigen Seite in der Fahrzeugbreitenrichtung bereitgestellt ist, und die konfiguriert ist, um aufgeblasen und auf der einwärtigen Seite in der Fahrzeugbreitenrichtung eines Insassen (P) entfaltet wird, der auf dem Fahrzeugsitz (12) sitzt, indem das Gas zu der Innenseite der Hauptkammer (38) zugeführt wird, und
eine Nebenkammer (40), die konfiguriert ist, um von einer unteren Position der Hauptkammer (38) aus aufgeblasen und zu der einwärtigen Seite in der Fahrzeugbreitenrichtung entfaltet zu werden,
**dadurch gekennzeichnet, dass**, wenn der Fahrzeugsitz (12) eine Vorderseitenposition einnimmt, bei der eine vordere Endfläche (16A) der Seitenfläche der Sitzlehne (16) näher an einer Fahrzeugvorderseite positioniert ist als eine vordere Fläche (22A) des Konsolenkastens (20) in einer Seitenansicht, die Nebenkammer (40), die aufgeblasen und entfaltet ist, mit der vorderen Fläche (22A) des Konsolenkastens (20) von der Fahrzeugvorderseite aus berührbar ist.

2. Fahrzeuginsassen-Rückhaltevorrichtung (10) nach Anspruch 1, wobei ein Deckelabschnitt (28) des Konsolenkastens (20) mit einem Überhangabschnitt (29) versehen ist, der weiter in Richtung der Fahrzeugvorderseite hervorsteht als die Vorderseite (22A) des Konsolenkastens (20).

3. Fahrzeuginsassen-Rückhaltevorrichtung (10) nach Anspruch 2, wobei eine obere Fläche (40A) der Nebenkammer (40) in der Seitenansicht an derselben Position wie eine untere Fläche (29A) des Überhangabschnitts (29) oder an einer niedrigeren Position als diese positioniert ist.

4. Fahrzeuginsassen-Rückhaltevorrichtung (10) nach Anspruch 2 oder 3, wobei eine Höhe eines hinteren Endabschnitts (40B) der Nebenkammer (40) gleich wie oder niedriger als eine Höhe der vorderen Fläche (22A) des Konsolenkastens (20) in der Seitenansicht ist.

5. Fahrzeuginsassen-Rückhaltevorrichtung (10) nach Anspruch 4, wobei ein abgestufter Abschnitt (42) an einer Oberseite des hinteren Endabschnitts (40B) der Nebenkammer (40), die aufgeblasen und entfaltet ist, in der Seitenansicht bereitgestellt ist.

6. Fahrzeuginsassen-Rückhaltevorrichtung (10) nach einem der Ansprüche 1 bis 5, wobei:
der Konsolenkasten (20) einen Deckelabschnitt (28) beinhaltet, der konfiguriert ist, um sich koordiniert mit einer Bewegung des Fahrzeugsitzes (12) zu der Fahrzeugvorderseite hin zu bewegen; und
die Nebenkammer (40) mit einer unteren Fläche (28B) des Deckelabschnitts (28), der bewegt wird, in Kontakt gebracht werden kann.

7. Fahrzeuginsassen-Rückhaltevorrichtung (10) nach einem der Ansprüche 1 bis 6, wobei der Nebenkammer (40) über ein Verbindungsloch, das in dem unteren Abschnitt der Hauptkammer (38) bereitgestellt ist, Gas zugeführt wird und konfiguriert ist, um mit einer Verzögerung gegenüber der Hauptkammer (38) aufgeblasen und entfaltet zu werden.

## Revendications

1. Dispositif de retenue d'occupant de véhicule (10), comprenant :
un siège de véhicule (12) qui est prévu dans un habitacle de véhicule d'un véhicule de façon à être mobile dans une direction avant-arrière du véhicule ;
une console (20) qui est prévue à l'intérieur de l'habitacle de véhicule, sur un côté vers l'intérieur dans une direction de largeur de véhicule par rapport au siège de véhicule (12) ;
un dispositif de gonflage (32) qui est prévu dans le siège de véhicule (12) et qui est configuré pour refouler du gaz lorsqu'il est activé ; et
un coussin gonflable latéral (36) qui comprend
une chambre principale (38) qui est prévue sur une partie latérale d'un dossier (16) du siège de véhicule (12), sur le côté vers l'intérieur dans la direction de largeur de véhicule, et qui est configuré pour être gonflé et déployé sur le côté vers l'intérieur dans la direction de largeur de véhicule d'un occupant (P) assis dans le siège de véhicule (12) par le gaz qui est délivré à l'intérieur de la chambre principale (38), et
une chambre secondaire (40) qui est configurée pour être gonflée et déployée sur le côté vers l'intérieur dans la direction de largeur de véhicule depuis une partie inférieure de la chambre principale (38),
**caractérisé en ce que**, quand le siège de véhicule (12) prend une position du côté avant dans laquelle une face d'extrémité avant (16A) de la partie latérale du dossier (16) est positionnée davantage sur un côté avant de véhicule qu'une face avant (22A) de console (20) en vue de côté, la chambre secondaire (40) qui est gonflée et déployée peut venir en contact avec la face avant (22A) de la console (20) depuis le côté avant de véhicule.

2. Dispositif de retenue d'occupant de véhicule (10) selon la revendication 1, dans lequel une partie de couvercle (28) de la console (20) est pourvue d'une partie de surplomb (29) qui dépasse davantage vers le côté avant de véhicule que la face avant (22A) de la console (20).

3. Dispositif de retenue d'occupant de véhicule (10) selon la revendication 2, dans lequel une face supérieure (40A) de la chambre secondaire (40) est positionnée dans la même position ou une position plus basse qu'une face inférieure (29A) de la partie de surplomb (29) dans la vue de côté.

4. Dispositif de retenue d'occupant de véhicule (10) selon la revendication 2 ou 3, dans lequel une hauteur d'une partie d'extrémité arrière (40B) de la chambre secondaire (40) est la même que ou inférieure à une hauteur de la face avant (22A) de la console (20) dans la vue de côté.

5. Dispositif de retenue d'occupant de véhicule (10) selon la revendication 4, dans lequel une partie étagée (42) est prévue sur un côté supérieur de la partie d'extrémité arrière (40B) de la chambre secondaire (40) qui est gonflée et déployée, dans la vue de côté.

6. Dispositif de retenue d'occupant de véhicule (10) selon l'une quelconque des revendications 1 à 5, dans lequel :
la console (20) comprend une partie de couvercle (28) qui est configurée pour se déplacer vers le côté avant de véhicule en coordination avec un mouvement du siège de véhicule (12) vers le côté avant de véhicule ; et
la chambre secondaire (40) peut venir en contact avec une face inférieure (28B) de la partie de couvercle (28) qui est déplacée.

7. Dispositif de retenue d'occupant de véhicule (10) selon l'une quelconque des revendications 1 à 6, dans lequel la chambre secondaire (40) est alimentée avec le gaz par l'intermédiaire d'un trou de communication prévu dans la partie inférieure de la chambre principale (38), et est configurée pour être gonflée et déployée avec un retard par rapport à la chambre principale (38).
